# EUROPÄISCHE PATENTSCHRIFT

(11) **EP 2 465 744 B1**
(45) Veröffentlichungstag und Bekanntmachung des Hinweises auf die Patenterteilung: **23.01.2019**
(21) Anmeldenummer: 11185654.8
(22) Anmeldetag: 18.10.2011
(51) Int. Cl.: B60T 17/22

(54) **Verfahren und Vorrichtung zum Erkennen von Lecks in Bremszylinderkreisen**
Device and method for detecting leaks in brake cylinder circuits
Procédé et dispositif de détection de fuites dans des circuits de cylindres de freinage

(30) Priorität: 20.10.2010 DE 102010048818
(43) Veröffentlichungstag der Anmeldung: 20.06.2012
(73) Patentinhaber: Bombardier Transportation GmbH, 10785 Berlin (DE)
(72) Erfinder: Plamper, Stefan, 13467 Berlin (DE); Viereck, Uwe, 10249 Berlin (DE); Reimann, Gunnar, 16547 Birkenwerder (DE)
(74) Vertreter: Patentanwälte Bressel und Partner mbB

(56) Entgegenhaltungen:
- EP-A1- 1 634 790
- EP-A1- 1 757 506
- US-A- 1 681 551
- US-A- 4 847 770

## Beschreibung

Die Erfindung betrifft ein Verfahren zum Erkennen einer Leckage in einem Bremszylinderkreis eines von mehreren Bremskreisen eines Zugbremssystems, eine Überwachungsvorrichtung für mindestens einen Bremskreis eines Zugbremssystems zum Ermitteln eines Lecks in einem Bremszylinderkreis sowie ein Zugbremssystem mit einer Fähigkeit Leckagen in Bremszylinderkreisen einzelner Bremskreise zu erkennen.

Aus dem Stand der Technik sind Zugbremssysteme bekannt, die über Bremsen verfügen, die beispielsweise als so genannte indirekte oder direkte Bremsen ausgeführt sein können. Über eine zentrale Versorgungsleitung, welche Hauptluftbehälterleitung genannt wird, werden einzelne Bremskreise mit einem Bremsfluid, in der Regel in Form von Druckluft, versorgt. Die einzelnen Bremskreise weisen einen dem Bremskreis zugeordneten Luftbehälter auf, der als lokales Reservoir für das Bremsfluid dient. Dieser ist über einen Hauptluftbehälterleitungsanschluss mit der Hauptluftbehälterleitung (HBL) fluidtechnisch gekoppelt. Ebenfalls strömungstechnisch mit dem Luftbehälter ist jeweils ein Relaisventil gekoppelt, welches einen Druck in einem Bremszylinderkreis steuert. Die Ansteuerung des Relaisventils erfolgt über mindestens ein Ventil des Vorsteuerkreises, welches über eine Steuerleitung gesteuert wird. Bei indirektem Bremsen wird ein solches Ventil des Vorsteuerkreises in der Regel als Steuerventil bezeichnet und über den Druck in einer so genannten Hauptluftleitung gesteuert. Bei direkten Bremssystemen wird ein solches Ventil des Vorsteuerkreises als Vorsteuerventil bezeichnet. Ein solcher Bremskreis ist in der Regel einem Drehgestell einer Zugeinheit zugeordnet. In dem Bremszylinderkreis sind in der Regel mehrere Bremszylinder vorhanden, die jeweils eine Bremsscheibe oder ein Rad an einer Achse des Drehgestells bremsen. Die Bremszylinder sind somit an dem Drehgestell in räumlicher Nähe zu den Rädern des Drehgestells angeordnet. Das Bremsfluid des Bremskreises wird zu den verschiedenen Bremszylindern über Bremsdruckleitungen geleitet. Diese Bremsdruckleitungen des Bremszylinderkreises sind in der Regel zumindest teilweise als Schläuche ausgebildet. Diese sind im Fahrbetrieb Umwelteinflüssen wie mechanischem Steinschlag und/oder Eisanhaftungen und Ähnlichem ausgesetzt, die zu Beschädigungen der Bremsdruckleitungen führen können. Ebenso können Manipulationen aufgrund von Vandalismus auftreten.

Es versteht sich, dass eine korrekte Funktionsweise der Bremsen eines Zugsystems sicherheitsrelevant für den Fahrbetrieb eines Zugsystems ist. Da eine Beschädigung oder ein Bruch einer Bremsdruckleitung eines Bremszylinderkreises zu einer verringerten Bremsleistung oder einem Ausfall eines oder sogar mehrerer Bremszylinder an einem Drehgestell führt, ist es wünschenswert, die Verfügbarkeit der Bremsen zuverlässig, insbesondere vor einem Fahrtantritt, zu prüfen.
Ein Aspekt einer solchen Verfügbarkeitsprüfung besteht darin, zu überprüfen, dass keine Leckagen in dem Bremszylinderkreis eines Bremskreises vorhanden sind.
Im Stand der Technik sind andere Sicherheitssysteme zur Überwachung einer Funktionstüchtigkeit der einzelnen Bremskreise bekannt, die beispielsweise ein Heißlaufen einzelner Bremsen verhindern sollen. Solche Systeme umfassen beispielsweise einen Drucksensor in dem Bremszylinderkreis, welcher unmittelbar hinter dem Relaisventil angeordnet ist. Hierüber können die Bremszylinderdrücke während des Fahrbetriebs überwacht werden. Beim Lösen der Bremsen wird der Druck in dem Bremszylinderkreis abgesenkt, sodass sich die Bremsen an den einzelnen Rädern lösen. Wird in einem Bremszylinderkreis dennoch ein Druck oberhalb eines Schwellenwertes festgestellt, so kann hieran erkannt werden, dass in einem Bremskreis die Bremszylinder nach wie vor mit Druck beaufschlagt sind und somit die Bremsen an den jeweiligen Rädern des Drehgestells noch aktiv sind. Durch eine solche Überwachung kann ein Heißlaufen der Bremsen an dem Drehgestell verhindert werden.

EP 1 634 790 A1 offenbart ein Verfahren und eine Vorrichtung zur Dichtheitsprüfung der Hauptluftleitung eines Zuges.

Geeignete Vorrichtungen und Verfahren zum Überprüfen von Leckagen in den Bremszylinderkreisen der einzelnen Bremskreise sind im Stand der Technik jedoch nicht bekannt.
Aufgabe der Erfindung ist es daher, ein Verfahren, eine Überwachungsvorrichtung sowie ein Zugbremssystem anzugeben, mit denen eine Verfügbarkeit der einzelnen Bremskreise, und insbesondere eine Leckfreiheit der einzelnen Bremszylinderkreise, nachgewiesen bzw. Leckagen in den Bremszylinderkreisen zuverlässig erkannt werden können.
Der Erfindung liegt der Gedanke zugrunde, bereits in die Zugbremskreise verbaute Komponenten weitgehend zu nutzen, um die Überprüfung auszuführen. Da bei einer Leckage in dem Bremszylinderkreis ein kontinuierlicher Verlust von Bremsfluid während des Bremsens auftritt, sind eine Flussmessung und/oder eine Drucküberwachung geeignet, solche Leckagen festzustellen. Die in den Bremszylinderkreisen verbauten Drucksensoren eignen sich hierfür jedoch nicht, da zwischen den Drucksensoren, welche in unmittelbarer Nähe der Relaisventile verbaut sind, und den Bremszylindern in modernen Zugbremssystemen Gleitschutzventile angeordnet sind, die ein Blockieren einzelner Räder oder Achsen verhindern, indem sie eine Drehbewegung der Räder bzw. Achsen im Verhältnis zur Zuggeschwindigkeit überwachen und bei einem ermittelten Überbremsen der Räder bzw. der Achse, welches zu einem Blockieren der Räder bzw. der Achse führen kann oder geführt hat, einen Druck in dem Strang des Bremszylinderkreises gezielt abbauen, in dem die dem Gleitschutzventil zugeordneten Bremszylinder angeordnet sind. Die Gleitschutzventile sind jedoch so ausgestaltet, dass selbst bei einem Abriss eines Druckluftschlauches zwischen dem Gleitschutzventil und einem der zugeordneten Bremszylinder in der Bremsdruckleitung kein schneller Druckabfall an dem zwischen Relaisventil und Gleitschutzventil angeordneten Drucksensor zu messen ist. Dies gilt umso mehr, da über das Relaisventil Bremsfluid nachgefördert wird, um den vorgegebenen Druck in dem Bremszylinderkreis aufrecht zu erhalten.

Erfindungsgemäß ist daher vorgesehen, eine das Bremsfluid, welches das Relaisventil versorgt, betreffende Größe zu messen und mit mindestens einem Referenzwert zu vergleichen.

Vorzugsweise ist vorgesehen einen Druck, welcher als R-Druck bezeichnet wird, an einem Versorgungsanschluss des Relaisventils zu messen. Der R-Druck stellt somit einen Versorgungsdruck mit Bremsfluid dar, der an dem Relaisventil zur Versorgung des Bremszylinderkreises anliegt. Anhand dieses R-Druckwertes kann über einen Vergleich mit mindestens einem Referenzwert ein Abweichen von einer Vorgabe aufgrund eines durch die Leckage verursachten Verbrauchs von Bremsfluid in dem Bremszylinderkreis ermittelt werden und somit auf eine Leckage geschlossen werden. Dies kann besonders gut in einem statischen oder quasistatischen Bremszustand ermittelt werden, in dem die Bremsanforderung in dem Bremskreis nicht mehr verändert wird.

Es wird ein Verfahren zum Erkennen einer Leckage in einem Bremszylinderkreis eines von mehreren Bremskreisen eines Zugbremssystems vorgeschlagen, bei dem die Bremskreise mit einem Bremsfluid über eine Hauptluftbehälterleitung versorgt werden und wobei jeder Bremskreis einen als lokales Reservoir für das Bremsfluid dienenden Luftbehälter sowie ein Relaisventil zum Steuern des Drucks c in dem Bremszylinderkreis umfasst, wobei eine das Bremsfluid, welches das Relaisventil versorgt, betreffende Größe gemessen wird und mit mindestens einem Referenzwert oder mehreren Referenzwerten verglichen wird und abhängig von dem Vergleichsergebnis ein Vorhandensein eines Lecks in dem Bremszylinderkreis des Bremskreises oder eine Leckfreiheit angezeigt wird, wobei das Verfahren bei einer Abweichung außerhalb eines Toleranzbereichs ein Leck anzeigt und bei einer Übereinstimmung oder bei einer Abweichung innerhalb des Toleranzbereichs eine Leckfreiheit anzeigt, d.h. beispielsweise, dass eine Abweichung um mehr als eine vorgegebene Toleranzgrenze ein Leck anzeigt.

Insbesondere wird eine Ausführungsform eines Verfahrens zum Erkennen einer Leckage in einem Bremszylinderkreis eines von mehreren Bremskreisen eines Zugbremssystems vorgeschlagen, bei dem die Bremskreise mit einem Bremsfluid über eine Hauptluftbehälterleitung (HBL) versorgt werden und wobei jeder Bremskreis einen als lokales Reservoir für das Bremsfluid dienenden Luftbehälter (R_n), ein Relaisventil zum Steuern des Drucks in dem Bremszylinderkreis sowie einen Drucksensor zum Messen des an dem Relaisventil anliegenden, als R-Druck bezeichneten Versorgungsdrucks des Bremsfluids umfasst, wobei das Verfahren die Schritte umfasst: Messen des R-Drucks (Versorgungsdrucks) in einem, vorzugsweise statischen oder quasistatischen, Bremszustand, wobei vorgesehen ist, dass der R-Druck mit mindestens einem Referenzwert (oder mehreren Referenzwerten) verglichen wird und abhängig von dem Vergleichsergebnis ein Vorhandensein eines Lecks in dem Bremszylinderkreis des Bremskreises oder eine Leckfreiheit signalisiert oder angezeigt wird.

Als statischer Bremszustand wird ein Bremszustand verstanden, in dem sich die Drücke in dem Bremskreis aufgrund der Bremsanforderung in dem jeweiligen Bremszustand nicht mehr ändern, sofern sämtliche Komponenten einwandfrei funktionieren. Als quasistatischer Bremszustand wird ein Zustand angesehen, in dem der Druck in dem Bremskreis sich zumindest aufgrund eines Anlegens oder Lösens der Bremsen, das heißt eines Aufbaus oder Abbau des Bremsdrucks in dem Bremszylinderkreis bei einem voll funktionsfähigen Bremskreis, nicht mehr verändert. Druckänderungen können aufgrund einer Nachführung von Bremsfluid über die Hauptluftbehälterleitung in dem quasistatischen Bremszustand auftreten. Bei jedem Bremsvorgang wird Bremsfluid verbraucht, welches für ein Aufbauen des Bremsdrucks in den Bremszylinderkreisen verwendet ist und beim Lösen der Bremsen aus den Bremszylinderkreisen entweicht und somit dem Bremssystem langfristig verloren geht. Nach dem Auslösen eines Bremsvorgangs wird daher über die Hauptluftbehälterleitung Bremsfluid nachgeführt, um ausreichend Bremsfluid in den Bremskreisen für zukünftige Bremsvorgänge bereitzustellen.

Eine erfindungsgemäße Überwachungsvorrichtung für mindestens einen Bremskreis eines Zugbremssystems zum Ermitteln eines Lecks in einem Bremszylinderkreis des mindestens einen Bremskreises wird vorgeschlagen, wobei der mindestens eine Bremskreis umfasst:
- einen Hauptluftbehälterleitungsanschluss für einen Anschluss an eine Hauptluftbehälterleitung , über die dem Bremskreis ein Bremsfluid bereitgestellt wird,
- einen mit dem Hauptluftbehälterleitungsanschluss verbundenen, als Reservoir dienenden Luftbehälter ,
- ein mit dem Luftbehälter über eine Versorgungsleitung in Verbindung stehendes Relaisventil zum Steuern des Drucks in dem Bremszylinderkreis,
wobei mindestens eine Messeinrichtung in der Versorgungsleitung zum Messen mindestens einer das Bremsfluid, welches das Relaisventil versorgt, betreffenden Größe angeordnet ist, und wobei die Überwachungsvorrichtung eine Auswerteeinrichtung umfasst, die mit der mindestens einen Messeinrichtung des Bremskreises gekoppelt ist und ausgebildet ist, in einem Bremszustand die aktuelle das versorgende Bremsfluid betreffende Größe des Bremskreises zu erfassen, und die aktuelle das versorgende Bremsfluid betreffende Größe in dem einen Bremszustand mit mindestens einem Referenzwert oder mehreren Referenzwerten zu vergleichen und abhängig von dem Vergleichsergebnis ein Vorhandensein eines Lecks in dem Bremszylinderkreis oder eine Leckfreiheit zu signalisieren, wobei eine Abweichung außerhalb eines Toleranzbereichs ein Leck und eine Übereinstimmung oder eine Abweichung innerhalb des Toleranzbereichs eine Leckfreiheit anzeigt. D.h. beispielsweise, dass eine Abweichung um mehr als eine Toleranzgrenze ein Leck anzeigt und eine Übereinstimmung oder Abweichung um weniger als die Toleranzgrenze eine Leckfreiheit anzeigt.

Eine bevorzugte Ausführungsform einer Überwachungsvorrichtung für mindestens einen Bremskreis eines Zugbremssystems zum Ermitteln eines Lecks in einem Bremszylinderkreis des mindestens einen Bremskreises wird vorgeschlagen, wobei der mindestens eine Bremskreis umfasst:
- einen Hauptluftbehälterleitungsanschluss für einen Anschluss an eine Hauptluftbehälterleitung, über die dem Bremskreis ein Bremsfluid bereitgestellt wird,
- einen mit dem Hauptluftbehälterleitungsanschluss verbundenen, als Reservoir dienenden Luftbehälter (R_n),
- ein mit dem Luftbehälter in Verbindung stehendes Relaisventil zum Steuern des Drucks in dem Bremszylinderkreis,
- einen Drucksensor zum Messen des an dem Relaisventil anliegenden, als R-Druck bezeichneten Versorgungsdrucks des Bremsfluids,
wobei die Überwachungsvorrichtung eine Auswerteeinrichtung umfasst, die mit einem Drucksensor des Bremskreises gekoppelt ist und ausgebildet ist, in einem, vorzugsweise statischen oder quasistatischen, Bremszustand den aktuellen R-Druck des Bremskreises zu erfassen, wobei vorgesehen ist, dass die Auswerteeinrichtung ausgebildet ist, den aktuellen R-Druck in einem statischen oder quasistatischen Bremszustand mit mindestens einem Referenzwert (oder mehreren Referenzwerten) zu vergleichen und abhängig von dem Vergleichsergebnis ein Vorhandensein eines Lecks in dem Bremszylinderkreis oder eine Leckfreiheit zu signalisieren.

Vorgeschlagen wird ein Zugbremssystem mit einer Fähigkeit, ein Leck in einem Bremszylinderkreis mindestens eines Bremskreises einer Mehrzahl von Bremskreisen zu erfassen, wobei das Zugbremssystem umfasst:
- eine Hauptluftbehälterleitung zum Versorgen der Bremskreise mit Bremsfluid und die Mehrzahl von Bremskreisen, wobei jeder der Bremskreise umfasst:
   - einen als lokales Reservoir für das Bremsfluid dienenden Luftbehälter,
   - ein Relaisventil zum Steuern des Drucks in dem Bremszylinderkreis sowie
   - mindestens eine Messeinrichtung zum Messen mindestens einer das Bremsfluid, welches das Relaisventil versorgt, betreffenden Größe,
- und mindestens eine Auswerteeinrichtung, die ausgebildet ist, in einem Bremszustand eine aktuelle, das versorgende Bremsfluid betreffende Größe zu erfassen und mit mindestens einem Referenzwert zu vergleichen und basierend auf einem Vergleichsergebnis ein Vorhandensein eines Lecks in dem Bremszylinderkreis des Bremssystems oder eine Leckfreiheit zu signalisieren, wobei eine Abweichung außerhalb eines Toleranzbereichs ein Leck und eine Übereinstimmung oder eine Abweichung innerhalb des Toleranzbereichs eine Leckfreiheit anzeigt. D.h. beispielsweise, dass eine Abweichung um mehr als eine Toleranzgrenze ein Leck anzeigt und eine Übereinstimmung oder Abweichung um weniger als die Toleranzgrenze eine Leckfreiheit anzeigt.

Ein bevorzugtes Zugbremssystem mit einer Fähigkeit, ein Leck in einem Bremszylinderkreis mindestens eines Bremskreises einer Mehrzahl von Bremskreisen zu erkennen, umfasst:
- eine Hauptluftbehälterleitung zum Versorgen der Bremskreise mit Bremsfluid und
- einer Mehrzahl von Bremskreisen, wobei jeder der Bremskreise umfasst:
   - einen als lokales Reservoir für das Bremsfluid dienenden Luftbehälter (R_n),
   - ein Relaisventil zum Steuern eines Drucks in einem Bremszylinderkreis sowie
   - einen Drucksensor zum Messen des an dem Relaisventil anliegenden, als R-Druck bezeichneten Versorgungsdrucks des Bremsfluids, und
   - mindestens eine Auswerteeinrichtung, die ausgebildet ist, in einem statischen oder quasistatischen Bremszustand einen aktuellen R-Druck des mindestens einen Bremskreises zu erfassen und mit mindestens einem Referenzwert (ggf. mit mehreren Referenzwerten) zu vergleichen und basierend auf einem Vergleichsergebnis ein Vorhandensein eines Lecks in den Bremszylinderkreis des Bremssystems oder eine Leckfreiheit zu signalisieren.

Vorteil der Erfindung ist es, dass ohne großen zusätzlichen Hardwareaufwand ein Ausfall eines Bremszylinderkreises aufgrund einer Leckage schnell und zuverlässig, insbesondere nach dem Herstellen eines statischen oder quasistatischen Bremszustands, ermittelt werden kann. Hierzu können bereits in gängigen Bremssystemen erfasste Messdaten in Form von Druckdaten verwendet und ausgewertet werden. Ebenso können Durchflussdaten oder weitere Daten alternativ oder zusätzlich verwendet werden.

Bei einer Ausführungsform ist vorgesehen, dass der mindestens eine Referenzwert ein in demselben, vorzugsweise statischen oder quasistatischen, Bremszustand gemessener R-Druck desselben Bremskreises ist, der vor dem aktuellen R-Druck gemessen wurde. Tritt ein Verlust an Bremsfluid auf, so kann in dem, vorzugsweise statischen oder quasistatischen, Bremszustand ein Druckgradient ermittelt werden, der durch den Verlust an Bremsfluid durch die Leckage verursacht ist. Daher ist bei einer Ausführungsform vorgesehen, dass die Auswerteeinrichtung ausgebildet ist, als den mindestens einen Referenzwert (pR_n(tᵢ)) oder einen der mehreren Referenzwerte den R-Druck desselben Bremskreises zeitlich vorangehend in demselben, vorzugsweise statischen oder quasistatischen, Bremszustand zu messen und bei einem Auftreten einer Druckdifferenz zwischen dem aktuellen R-Druck (pR_n(tₐₖₜᵤₑₗₗ)) und dem mindestens einen Referenzwert (pR_n(tᵢ)), deren Betrag größer als ein Vorgabewert ist, das Vorhandensein eines Lecks in dem Bremszylinderkreis anzuzeigen.

Besonders vorteilhaft wird somit eine Druckdifferenz zwischen dem Referenzwert, der ein R-Druckwert ist, und dem aktuellen R-Druckwert gebildet und das Vorhandensein eines Lecks in dem Bremszylinderkreis angezeigt, wenn deren Betrag von einem Vorgabewert abweicht.

Eine noch größere Zuverlässigkeit der Messung und Überwachung erreicht man, wenn man eine Differenz zwischen nacheinander in einem Zeitabstand gemessenen Werten der das Bremsfluid betreffenden Größen bildet und ins Verhältnis zu der den Zeitabstand angebenden Zeitspanne setzt. Hierdurch wird ein Gradient der das Bremsfluid kennzeichnenden Größe, beispielsweise des R-Drucks gebildet. Einflüsse systematischer Messfehler der Messeinrichtung können so weitgehend kompensiert werden. Die das Bremsfluid kennzeichnende Größe ist hier dann der Gradient. Der mindestens eine Referenzwert oder einer der Referenzwerte, der für den Vergleich herangezogen wird, ist in diesem Falle ein Wert für einen tolerierbaren Gradienten der das Bremsfluid betreffenden Größe. Ist der R-Druck die das Bremsfluid betreffende Größe, so umfasst oder ist der mindestens eine Referenzwert bei solch einer Ausführungsform einen Druckgradientenwert. Ist der ermittelte oder abgeleitete Druckgradient größer als der Druckgradientenwert, der als mindestens eine Referenzwert dient, liegt ein Leck im Bremszylinderkreis vor. Eine Ausführungsform sieht vor, dass die Auswerteeinrichtung ausgebildet ist, zusätzlich zu dem aktuellen R-Druck während desselben, vorzugsweise statischen oder quasistatischen, Bremsausführung weitere R-Drücke des mindestens einen Bremskreises zu erfassen und mindestens einen Druckgradienten als die das versorgende Bremsfluid kennzeichnende Größe zu errechnen und als den mindestens einen Referenzwert einen Druckgradientenwert zu nutzen.

Alternativ oder zusätzlich ist bei einer weiteren Ausführungsform vorgesehen, dass als der mindestens eine Referenzwert oder einer von mehreren Referenzwerten ein R-Druck eines anderen gleichartigen Bremskreises gemessen wird und erneut zwischen dem Referenzwert und dem aktuellen R-Druckwert des überwachten Bremskreises eine Differenz gebildet wird und bei einer Abweichung von einem Vorgabewert ein Vorhandensein eines Lecks angezeigt wird. Vorteil dieser Ausführungsform ist es, dass auch bei einer Nachförderung von Bremsfluid über die Hauptluftbehälterleitung ein zuverlässiges Signal gemessen wird, da in einem intakten System die Nachförderung zu einem höheren Druckanstieg als in dem Bremskreis führt, in dem aufgrund der Leckage in dem Bremszylinderkreis ständig Bremsfluid verbraucht wird. Bei einer Ausführungsform weist die Auswerteeinrichtung einen Eingang zum Empfangen des mindestens einen Referenzwertes oder der mehreren Referenzwerte aufweist, wobei der mindestens eine Referenzwert oder die mehreren Referenzwerte einen R-Druck oder mehrere R-Drücke mindesten eines anderen gleichartigen Bremskreises während desselben, vorzugsweise statischen oder quasistatischen, Bremszustands und/oder ein zeitgleich mit dem aktuellen R-Druck in der Hauptluftbehälterleitung gemessenen HBL-Druck (pMRP(tₐₖₜᵤₑₗₗ)) umfasst oder umfassen, und ausgebildet ist, bei einem Auftreten einer Druckdifferenz zwischen dem aktuellen R-Druck und dem mindestens einen Referenzwert, deren Betrag größer als ein Vorgabewert ist, das Vorhandensein eines Lecks in dem Bremszylinderkreis anzuzeigen.

Eine Vergrößerung der beobachteten Druckdifferenz zwischen dem aktuellen R-Druck und einem Referenzwert, der einen R-Druck repräsentiert, kann dadurch herbeigeführt werden, dass eine Nachspeisung von Bremsfluid in die Hauptluftbehälterleitung und/oder einen Hauptluftbehälter, aus dem die Hauptluftbehälterleitung gespeist wird, unterbunden wird. Hierdurch ist gewährleistet, dass keine Nachförderung von Bremsfluid in den Bremskreis stattfinden kann, sodass in kurzer Zeit die in dem Bremskreis vorhandene Bremsfluidmenge aufgrund des Verlustes von Bremsfluid in dem Bremszylinderkreis über einen Druckabfall im R-Druck festzustellen ist. Ein Druckabfall in dem Bremskreis über ein Entweichen von Bremsfluid durch die Hauptluftbehälterleitung wird dadurch verhindert, dass unmittelbar hinter dem Hauptluftbehälterleitungsanschluss des Bremskreises ein Rückschlagventil angeordnet ist, welches ein Rückströmen von Bremsfluid in die Hauptluftbehälterleitung unterbindet. Eine Nachförderung von Bremsfluid kann in der Regel durch ein Abschalten eines oder mehrerer Kompressoren in einer Zugeinheit herbeigeführt werden, die die als Reservoire dienenden Hauptluftbehälter speisen. Auch die auftretenden Druckgradienten bei einem vorhandenen Leck sind erhöht, wenn die Nachspeisung unterbunden ist. Bei einer Ausführungsform ist die mindestens eine Auswerteeinrichtung ausgebildet ist, eine Einspeisung von Bremsfluid in die Hauptluftbehälterleitung und/oder einen mit der Hauptluftbehälterleitung gekoppelten Hauptluftbehälter in dem, vorzugsweise statischen oder quasistatischen, Bremszustand zu unterbinden und die Erfassung des aktuellen R-Drucks nach dem Unterbinden der Einspeisung zu veranlassen.

Als Referenzwert kann auch ein Druck in der Hauptluftbehälterleitung oder in dem hiermit in Verbindung stehenden Hauptluftbehälter gemessen und verwendet werden.

Insbesondere wenn die Überwachungsvorrichtung ausgebildet ist, den oder die Kompressoren, der oder die die Hauptluftbehälterleitung speisen, während der Überprüfung abzuschalten oder von der Hauptluftbehälterleitung zumindest fluidtechnisch abzukoppeln, ist die Messung einer Strömungsmenge oder einer Strömungsgeschwindigkeit in der Versorgungsleitung des Relaisventils eine vorteilhafte Ausführungsform. Eine große Fluidmenge oder hohe Strömungsgeschwindigkeiten, insbesondere während eines quasistatischen Bremszustandes, zeigen ein Leck in dem Bremszylinderkreis an. Daher wird bei einer Ausführungsform als die das Bremsfluid betreffende Größe eine Fluidströmungsmenge oder eine Fluidströmungsgeschwindigkeit gemessen. Als die das versorgende Bremsfluid kennzeichnende Größe können dann die Fluidströmungsmenge oder Fluidströmungsgeschwindigkeit oder deren Gradienten dienen.

Wird die Nachförderung von Bremsfluid in die Hauptluftbehälterleitung nicht unterbunden, so ist es vorteilhaft, eine Drossel vorzusehen, die eine Nachförderung von Bremsfluid zu dem Relaisventil vor dem Drucksensor zum Messen des R-Drucks reduziert. Vorzugsweise wird eine solche Drossel unmittelbar vor oder nach dem Rückschlagventil, aber noch vor einer Abzweigung in den Luftbehälter des Bremskreises, angeordnet. Andere Ausführungsformen sehen vor, dass die Drossel nach der Verzweigung in den Luftbehälter des Bremskreises angeordnet ist und somit zwischen dem Luftbehälter und dem Drucksensor zur Messung des R-Drucks abgeordnet ist. Die Drossel kann beispielsweise als Düse ausgebildet sein. Es können jedoch auch beliebige andere drosselnde Einrichtungen, die dem Fachmann bekannt sind, eingesetzt werden.

Eine Zuverlässigkeit des Gesamtsystems kann gesteigert werden, indem zusätzlich zu dem aktuellen R-Druck während desselben, vorzugsweise statischen oder quasistatischen, Bremszustands weitere R-Drücke des mindestens einen Bremskreises erfasst werden und hierzu zeitgleich oder zeitlich gekoppelt gemessene Druckwerte anderer Bremskreise als Referenzwerte erfasst oder empfangen werden und das Vergleichen des aktuellen R-Drucks mit dem mindestens einen Referenzwert ein Auswerten eines zeitlichen R-Druckverhaltens des Bremskreises während des, vorzugsweise quasistatischen oder statischen, Bremszustands mit mindestens einem Druckverhalten der zeitgleich gemessenen oder zeitlich gekoppelt gemessenen Referenzwerte umfasst. Insbesondere in einem quasistatischem Bremszustand, in dem eine Nachführung von Bremsfluid in die Bremskreise stattfindet, ist beispielsweise ein Vergleich des R-Drucks und hier insbesondere des zeitlichen R-Druckverhaltens mit dem R-Druckverhalten in einem oder mehreren gleichartigen Bremskreisen von Vorteil, um auf eindeutige Weise ein Leck in dem Bremszylinderkreis festzustellen. Besonders bevorzugt findet ein Vergleich mit Referenzwerten mehrerer verschiedener gleichartiger Bremskreise statt. So können auch Ausfälle mehrerer Bremskreise in einem Zugbremssystem zuverlässig erkannt werden.

Ein Vergleich des zeitlichen Druckverhaltens unterschiedlicher Bremskreise kann beispielsweise ermittelt werden, indem jeweils eine Differenzbildung zwischen einem Wert des zu überwachenden Bremskreises und einem zeitgleich oder zeitlich gekoppelt erfassten entsprechenden Referenzwert eines anderen Bremskreises bestimmt wird. Ändert sich die Differenz im zeitlichen Verlauf, so kann hieraus auf ein Leck geschlossen werden. Zeitlich gekoppelt heißt in diesem Zusammenhang, dass eine zeitliche Korrelation zwischen der Erfassung des Referenzwertes eines anderen Bremskreises oder eines Drucks der Hauptbehälterluftleitung und einem entsprechenden R-Druckwert des zu überwachenden Bremskreises vorliegt. Die zeitliche Korrelation ist für unterschiedliche nacheinander gemessene R-Druckwerte und die entsprechenden Referenzwerte hierbei jeweils innerhalb von Toleranzgrenzen gleich. Vorzugsweise werden die Druckwerte zeitgleich in dem zu überwachenden Bremskreis und dem System, welches den Referenzdruck liefert, erfasst. Werden als Referenzwerte R-Drücke gleichartiger Bremskreise herangezogen, so wird bei einem Leck in dem zu überwachenden Bremskreis bei nicht stattfindender Nachförderung von Bremsfluid in die Bremskreise die Differenz zwischen zeitgleich oder zeitgekoppelten Druckwerten in dem zu überwachenden Bremskreis und einem Referenzbremskreis kontinuierlich mit der Zeit zunehmen. Findet eine Nachförderung statt, so ist das zeitliche Druckverhalten der Differenzen abhängig von dem Verhältnis der Verlustmenge zu der Menge an nachgefördertem Bremsfluid. Ist die Verlustmenge größer als die nachgeförderte Bremsfluidmenge, so nimmt ein Betrag der Druckdifferenz zwischen zeitgleich oder zeitgekoppelt erfassten R-Drücken gleichartiger Bremskreise zunächst kontinuierlich zu und erreicht schließlich einen Maximalwert. Ist hingegen die Menge des nachgeförderten Bremsfluids größer als die Verlustmenge, so steigt zunächst die Differenz betragsmäßig ebenfalls an, um anschließend, nachdem der Bremskreis, welcher intakt ist, wieder vollständig aufgefüllt und auf einen maximalen Druck gebracht ist, abzusinken.

Auch wenn die zeitgleich erfassten Referenzwerte zu den R-Druckwerten des überwachten Bremskreises Druckwerte der Hauptluftbehälterleitung sind, ist ein zeitliches Verhalten der Differenz für einen Bremskreis mit einer Leckage im Bremszylinderkreis aufgrund der dort auftretenden Verluste verschieden von dem zeitlichen Verlauf der Differenzwerte intakter Bremskreise. Hierbei sind die Differenzen, die beobachtbar sind, betragsmäßig größer, wenn zwischen dem Drucksensor und der Hauptluftbehälterleitung eine Drossel angeordnet ist.

Ein Zugbremssystem mit einer entsprechenden erfindungsgemäßen Verfügbarkeitsüberwachung bzw. Überwachung auf Leckagen in Bremszylinderkreisen kann in einer zentralen Auswerteeinheit umgesetzt sein, die die R-Druckwerte der einzelnen Bremskreise und ggf. Drücke der Hauptbehälterluftleitung erfassen kann. Alternativ oder zusätzlich ist es möglich, dass den einzelnen Bremskreisen oder Gruppen von Bremskreisen Steuerungs- und/oder Überwachungsmodule zugeordnet sind, die für einen einzelnen oder mehrere zugeordnete Bremskreise die Überprüfung auf Funktionstüchtigkeit bzw. Leckagen in den Bremszylinderkreisen ausführen.

Bei einer Ausführungsform ist vorgesehen, dass die Auswerteeinrichtung ausgebildet ist, die das versorgende Bremsfluid bereffende Größe während eines statischen oder quasistatischen Bremszustandes zu erfassen.

Bei einer Ausführungsform des Zugbremssystems umfasst die Messeinrichtung einen Drucksensor zum Messen des an dem Relaisventil anliegenden, als R-Druck bezeichneten Versorgungsdrucks des Bremsfluids, und ist die Auswerteeinrichtung ausgebildet als die aktuelle das versorgende Bremsfluid betreffende Größe den aktuellen R-Druck des mindestens einen Bremskreises zu erfassen.

Bei einer Ausführungsform ist vorgesehen, dass die mindestens eine Auswerteeinrichtung ausgebildet ist, den mindestens einen Referenzwert zu empfangen und der mindestens eine Referenzwert einen in demselben, vorzugsweise statischen oder quasistatischen, Bremszustand gemessenen R-Druck eines anderen Bremskreises der Mehrzahl der Bremskreise umfasst.

Bei einer Ausführungsform ist vorgesehen, dass an der Hauptluftbehälterleitung mindestens ein HBL-Drucksensor angeordnet ist und die Auswerteeinheit ausgebildet ist, HBL-Druckwerte (pMRP(t)) des HBL-Drucksensors zu erfassen und der mindestens eine Referenzwert einen HBL-Druckwert (pMRP(tₐₖₜᵤₑₗₗ)) umfasst, der zeitgleich mit dem aktuellen R-Druck (pR_n(tₐₖₜᵤₑₗₗ)) erfasst ist.

Bei einer Ausführungsform eines Zugbremssystems ist die mindestens eine Auswerteeinrichtung ausgebildet ist, die aktuellen R-Drücke mehrerer Bremskreise auszuwerten und deren Leckfreiheit in den entsprechenden Bremszylinderkreisen zu überwachen.

Bei einer Ausführungsform ist vorgesehen, dass die Auswerteeinrichtung den einzelnen Bremskreisen zugeordnete Überwachungsmodule aufweist, die jeweils den aktuellen R-Druck des zugeordneten Bremskreises erfassen und auswerten.

Bei einer Ausführungsform ist vorgesehen, dass die Auswerteeinrichtung den einzelnen Bremskreisen zugeordnete Überwachungsmodule aufweist, die jeweils einen Druckgradient des das Relaisventil versorgenden Bremsfluids als die kennzeichnende Größe ermitteln.

Bei einer Ausführungsform ist vorgesehen, dass die Auswerteeinrichtung ausgebildet ist, für den mindestens einen Bremskreis zusätzlich zu dem aktuellen R-Druck während desselben, vorzugsweise statischen oder quasistatischen, Bremszustands weitere R-Drücke zu erfassen und hierzu zeitgleich oder zeitlich gekoppelt erfasste Referenzwerte zu empfangen oder zu erfassen und ein Vergleichen des aktuellen R-Drucks mit dem mindestens einen Referenzwert und ein Auswerten eines zeitlichen R-Druckverhaltens des Bremskreises während des, vorzugsweise quasistatischen oder statischen, Bremszustands mit einem Druckverhalten der zeitgleich oder zeitgekoppelt erfassten Referenzwerte umfasst.

Bei einer Ausführungsform ist vorgesehen, dass die mindestens eine Messeinrichtung eine Strömungsgeschwindigkeitsmesseinrichtung oder eine Flussmesseinrichtung umfasst.

Ein Zugbremssystem wird in verschiedenen Ausführungsformen mit den gleichen Merkmalen weitergebildet wie die beschriebene Überwachungsvorrichtung. Dieses bedeutet, dass Weiterbildungen der Überwachungsvorrichtung ebenso mit denselben Vorteilen auf ein Zugbremssystem angewendet werden. Ein Zugbremssystem setzt somit mindestens eine Überwachungsvorrichtung um.

Die Ausführungsformen des Zugbremssystems und die Ausführungsformen der Überwachungsvorrichtung sind ausgebildet, die unterschiedlichen beschriebenen Ausführungsformen des Verfahrens zum Erkennen einer Leckage auszuführen.

Eine Überwachung auf Leckage kann vor dem Fahrantritt und/oder während der Bremsvorgänge in Fahrbetrieb erfolgen.

Nachfolgend wird die Erfindung anhand bevorzugter Ausführungsbeispiele unter Bezugnahme auf eine Zeichnung näher erläutert. Hierbei zeigen:
- Fig. 1: eine schematische Darstellung eines Bremskreises ein Zugbremssystems; und
- Fig. 2: ein schematisches Ablaufdiagramm eines Verfahrens zum Feststellen eines Lecks in einem Bremskreis eines Zugbremssystems.

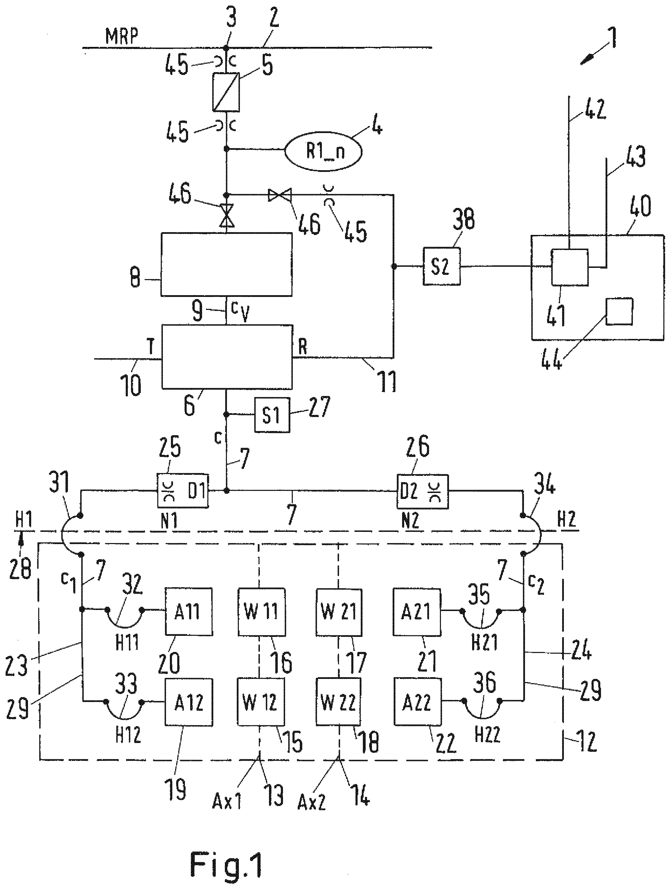

In Fig. 1 ist schematisch ein Bremskreis 1 eines Zugbremssystems dargestellt. Der Bremskreis wird über eine Hauptluftbehälterleitung 2 mit einem Bremsfluid (nicht dargestellt), in der Regel in Form von Druckluft, versorgt. Hierfür ist der Bremskreis 1 über einen Hauptluftbehälterleitungsanschluss 3 an die Hauptluftbehälterleitung 2 angeschlossen. Weitere gleichartige Bremskreise (nicht dargestellt), welche analog zu dem Bremskreis 1 aufgebaut sind, sind ebenfalls an der Hauptluftbehälterleitung 2 angeschlossen. Im Folgenden wird davon ausgegangen, dass die verschiedenen Bremskreise des Zugbremssystems durchnummeriert sind. Im Folgenden wird angenommen, dass der hier dargstellte Bremskreis 1 der n-te Bremskreis des Zugbremssystems ist.

Der Bremskreis 1 umfasst einen Luftbehälter 4 (R1_n), der als lokales Reservoir für das Bremsfluid dient. Strömungstechnisch ist der Luftbehälter 4 mit dem Hauptluftbehälterleitungsanschluss 3 über ein Rückschlagventil 5 verbunden. Das Rückschlagventil 5 verhindert, dass Bremsfluid aus dem Bremskreis 1 zurück in die Hauptluftbehälterleitung 2 strömen kann.

Der Bremskreis 1 umfasst ferner ein sogenanntes Relaisventil 6, welches einen Bremsfluiddruck c in einem Bremszylinderkreis 7 steuert. Angesteuert wird das Relaisventil 6 über ein sogenanntes Vorsteuerventil 8. Dieses erzeugt einen Steuerdruck c_{V} in einer Vorsteuerleitung 9. Das Relaisventil 6 kann als lastabhängiger Druckregler betrieben werden und hierfür mit einer Lastleitung 10 gekoppelt sein. Hierüber wird der Bremsdruck in Abhängigkeit von der Belastung der jeweiligen Zugeinheit beeinflusst, in der der Bremskreis 1 angeordnet ist. Das zum Erzeugen des Bremszylinderkreisdrucks c benötigte Bremsfluid sowie die hierfür benötigte Energie wird dem Relaisventil 6 über das unter Druck stehende Bremsfluid in einer Versorgungsleitung 11 zugeführt und bereitgestellt. Diese ist strömungstechnisch mit dem Luftbehälter 4 und dem Hauptluftbehälterleitungsanschluss 3 und hierüber mit der Hauptluftbehälterleitung 2 verbunden. Der Druck in der Versorgungsleitung 11, welches ein Versorgungsdruck ist, wird als R-Druck bezeichnet. Die Versorgungsleitung 11 und eine hierzu strömungstechnisch parallel ausgebildete mit dem Vorsteuerventil 9 verbundene Leitung können über Absperrventile 46 unterbrochen werden, um den Bremskreis beispielsweise im Falle eines Defekts zu deaktivieren.

Der Bremszylinderkreis 7 ist einem Drehgestell 12 zugeordnet. In der dargestellten Ausführungsform umfasst das Drehgestell zwei Achsen 13, 14. Die Achsen 13, 14 weisen jeweils zwei Räder 15, 16 bzw. 17, 18 auf. Jedem Rad 15 - 18 ist ein Bremszylinder 19 - 22 zugeordnet, welcher Bremsmittel (nicht dargestellt) zum Bremsen des jeweils zugeordneten Rads 15 - 18 betätigt. Der Bremszylinderkreis 7 ist in zwei Stränge 23, 24 unterteilt. Der eine Strang 23 ist der einen Achse 13 sowie den Bremszylinder 19, 20 und der andere Strang 24 der anderen Achse 14 und den entsprechenden Bremszylindern 21, 22 zugeordnet. Um ein Blockieren der Räder 15 - 18 jeweils achsbezogen beim Bremsen verhindern zu können, welches zu einem Gleiten der Räder über Schienen führen würde, ist in jedem der Stränge 23, 24 jeweils ein Gleitschutzventil 25, 26 angeordnet. Drohen die Räder 15, 16 der einen Achse 13 bzw. 17,18 der anderen Achse 14 zu blockieren, sorgt das der entsprechenden Achse 13, 14 zugeordnete Gleitschutzventil 25 bzw. 26 dafür, dass der Bremskreiszylinderdruck c in dem entsprechenden Strang 23 auf einen verringerten Bremszylinderdruck c₁ bzw. in dem anderen Strang 24 auf den Bremszylinderdruck c₂ abgesenkt wird, sodass ein Bremsdruck in den entsprechenden Bremszylindern 19, 20 bzw. 21, 22 soweit verringert wird, dass die Räder 15, 16 bzw. 17, 18 grade nicht blockieren. Anschließend wird der Bremsdruck c₁ bzw. c₂ erneut wieder erhöht, indem die Gleitschutzventile 25 bzw. 26 erneut geschlossen werden.

Über einen Bremszylinderkreis-Drucksensor 27 im Bremszylinderkreis 7 kann der Bremszylinderkreisdruck c gemessen werden um sicherzustellen, dass nach dem Lösen der Bremsen in dem Bremszylinderkreis 7 kein erhöhter Druck mehr vorhanden ist, der ein Anliegen der Bremsen an den Rädern 15 - 18 signalisieren würde und im Fahrbetrieb zu einem Heißlaufen der Bremsen führen würde.

Bis auf die Bremszylinder 19 - 22 und die entsprechenden Zuleitungen befinden sich sämtliche Komponenten des Bremskreises 1 im Inneren eines Wagenkörpers 28. Diese sind somit vor Umwelteinflüssen, Vandalismus und Beschädigung weitestgehend geschützt. Da sich das Drehgestell 12 jedoch gegenüber dem Wagenkörper 28 im Betrieb bewegen muss, sind ein Teil der Bremszylinderkreisleitungen 29 als Druckschläuche 31 - 36 ausgebildet. Diese sind für Steinschlag und/oder durch Eisanhaftungen sowie Vandalismus verursachte Schäden besonders anfällig. Ein Bruch einer solchen Leitung 31 - 36 verursacht somit ein Leck in dem Bremszylinderkreis 7 und führt in der Regel zum Ausfall mindestens eines Bremszylinders, häufig jedoch zum Ausfall zweier oder aller vier Bremszylinder 19 - 22.

An moderne Züge wird heute jedoch der Anspruch gestellt, dass z. B. vor einem Fahrtantritt oder bei einem Fahrtrichtungswechsel eine Verfügbarkeit der einzelnen Bremskreise zu prüfen ist. Insbesondere ist zu prüfen, dass keine Leckagen in den Bremszylinderkreisen 7 der verschiedenen Bremskreise 1 vorhanden sind. Messungen des Bremszylinderkreisdrucks c mittels des Drucksensors 27 sind in der Regel nicht aussagekräftig, da die Gleitschutzventile 25, 26 Drosseln darstellen, sodass trotz einer Leckage in einem der als Druckschläuche 31 - 36 ausgebildeten Rohrleitungsabschnitte der unterschiedlichen Stränge 23, 24 des Bremszylinderkreises 7 kein aussagekräftiger Druckabfall ermittelt werden kann, zumal über das Relaisventil 6 der Bremszylinderkreisdruck c nachgesteuert wird. Um ein Leck festzustellen, ist daher vorgesehen, an einem Drucksensor 38 den Versorgungsdruck, welcher als R-Druck bezeichnet ist, zu messen und auszuwerten. Hierzu wird ein Bremszustand hergestellt und vorzugsweise eine Zeitspanne abgewartet, bis die Bremsen in dem entsprechenden Bremskreis 1 ihre Bremsstellung erreicht haben. Die Überwachung wird vorzugsweise im Stillstand des Fahrzeugs ausgeführt, sodass eine tatsächliche Bremswirkung keinen Einfluss auf die Überwachung hat. Die Überwachung kann jedoch auch bei jedem oder ausgewählten Bremsvorgängen im Fahrbetrieb erfolgen.

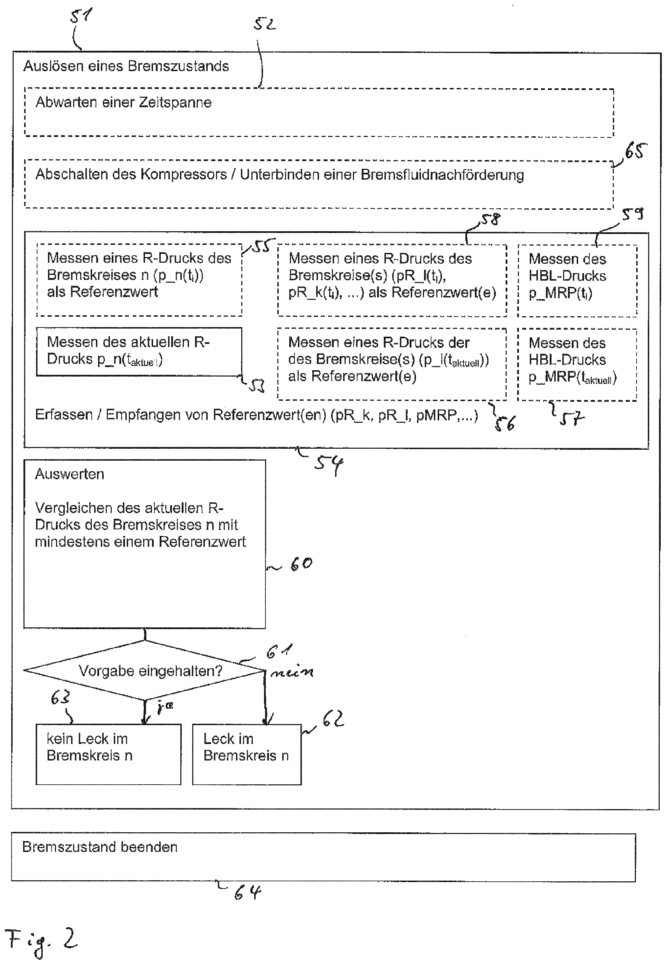

In Fig. 2 ist ein schematisches Ablaufdiagramm eines Verfahrens zum Überwachen der Funktionsfähigkeit eines Bremskreises bzw. einer Vielzahl von Bremskreisen eines Zugbremssystems exemplarisch schematisch beschrieben. Zunächst wird ein Bremszustand ausgelöst 51. Anschließend wird vorzugsweise eine Zeitspanne abgewartet 58, um einen statischen oder quasistatischen Bremszustand zu erreichen. Ein statischer Bremszustand ist dann erreicht, wenn sich die Drücke in dem Bremskreis aufgrund des Anlegens der Bremsen nicht mehr ändern. Quasistatisch ist ein Bremszustand, bei dem aufgrund einer Nachförderung von Bremsfluid sich die Drücke in dem Bremskreis ändern, jedoch der Druck in dem Bremszylinderkreis, sofern dieser funktionstüchtig ist, unverändert bleibt. Nach dem Abwarten einer Zeitspanne, in der sich der statische bzw. quasistatische Bremszustand eingestellt hat, wird ein aktueller R-Druck des Bremskreises n gemessen pR_n(tₐₖₜᵤₑₗₗ) 53. Ferner werden ein oder mehrere Referenzwerte, welche ebenfalls in der Regel Drücke sind, erfasst oder empfangen 54.

Das Erfassen oder Empfangen von Referenzwerten kann zeitgleich oder auch zeitlich vorgelagert zu dem Messen des aktuellen R-Drucks pR_n(tₐₖₜᵤₑₗₗ) erfolgen.

Bei einer Ausführungsform wird als Referenzwert ein zeitliches vor dem aktuellen R-Druck gemessener R-Druck desselben Bremskreises erfasst, der ebenfalls während des statisch oder quasistatischen Bremszustands erfasst ist 55. Alternativ oder zusätzlich ist es möglich, zeitgleich oder zeitlich korreliert, das heißt in einem vorgegebenen Zeitintervall um den Zeitpunkt der aktuellen Ermittlung des R-Drucks in dem Bremskreis n in anderen gleichartigen Bremskreisen I und/oder k, ... R-Drücke als Referenzwerte zu messen pR_k(tₐₖₜᵤₑₗₗ), pR_l(tₐₖₜᵤₑₗₗ), .... Dies kann in einem gleichartigen Bremskreis k oder mehreren verschiedenen gleichartigen Bremskreisen k, l des Zugbremssystems erfolgen. Ebenso ist es möglich, zeitgleich oder zeitlich korreliert, das heißt in einem vorgegebenen Zeitfenster, um die Messung des aktuellen R-Drucks pR_n(tₐₖₜᵤₑₗₗ) in dem Bremskreis n einen Druck der Hauptluftbehälterleitung zu messen pMRP(tₐₖₜᵤₑₗₗ) 56. Ebenso ist es alternativ oder zusätzlich möglich, dass zeitlich vorausgehend in einem oder mehreren gleichartigen Bremskreisen R-Drücke pR_k(tᵢ), pR_l(tᵢ) als Referenzwerte 58 erfasst werden oder dem aktuellen Zeitpunkt vorausgehende Hauptbehälterleitungsdrücke pMRP(tᵢ) 59 erfasst werden. Werden dem aktuellen Zeitpunkt vorausgehende R-Drücke in dem Bremskreis n zu Zeiten tᵢ mit tᵢ < tₐₖₜᵤₑₗₗ erfasst, und hierzu korreliert Referenzwerte aus gleichartigen Bremskreisen oder der Hauptluftbehälterleitung erfasst, so werden diese vorzugsweise jeweils zu gleichen Zeiten tᵢ oder innerhalb vorfestgelegter Zeitintervalle erfasst. Eine solche zeitgleiche Erfassung oder eine Erfassung in einem vorfestgelegten Zeitintervall wird als zeitlich gekoppelte Erfassung verschiedener Druckwerte bezeichnet. Der aktuell ermittelte R-Druckwert sowie mindestens einer der als Referenzwert erfassten Drücke werden verglichen 60. Das Vergleichsergebnis wird daraufhin überprüft, ob es innerhalb einer Vorgabe bleibt 61. Ist dies nicht der Fall, liegt ein Leck in dem Bremskreis vor. Dies wird entsprechend signalisiert 62. Wird die Vorgabe eingehalten, so wird eine Leckfreiheit signalisiert 63. Die Verfahrensschritte des Auswertens 60, des Vergleichens mit der Vorgabe 61 sowie des Signalisierens eines Lecks oder einer Leckfreiheit 62, 63 können anschließend oder zeitgleich auch für die weiteren Bremskreise des Zugbremssystems ausgeführt werden. Nach dem Beenden der Überprüfung wird die Bremse erneut gelöst 64. Bei einer bevorzugten Ausführungsform wird zusätzlich vor dem Erfassen der Referenzwerte und des aktuellen R-Drucks eine Nachführung von Bremsfluid über die Hauptluftbehälterleitung unterbunden 65, beispielsweise in dem ein Kompressor abgeschaltet wird. Über eine Strichelung ist angedeutet, dass dieser Verfahrensschritt optional ausgeführt werden kann. Ebensolches gilt für das Abwarten der Zeitspanne 52.

Auch die Blöcke 55 - 59, die verschiedene Verfahrensschritte zum Erfassen von Referenzwerten betreffen, sind gestrichelt dargestellt, um anzudeuten dass diese nicht jeweils alle ausgeführt werden müssen, um das Verfahren auszuführen. Zumindest einer der Verfahrensschritte muss jedoch ausgeführt werden, um mindestens einen Referenzwert zu erfassen.

Um die beschriebene Überprüfung ausführen zu können, ist bei der Ausführungsform nach Fig. 1 eine Überwachungsvorrichtung 40 vorgesehen, die eine Auswerteeinrichtung 41, beispielsweise in Form eines programmgesteuerten Mikrorechners, umfasst. Diese Auswerteeinrichtung 41 ist ausgebildet, die Messdaten des Drucksensors 38 zum Ermitteln des R-Drucks auszulesen. Ebenso ist diese Auswerteeinrichtung 41 ausgebildet, R-Druckwerte von weiteren Bremskreisen (nicht dargestellt) bzw. der Hauptluftbehälterleitung zu erfassen oder zu empfangen. Dies ist über eine Signalleitung 42 nur schematisch angedeutet. Ein Ergebnis der Auswertung und Signalisieren der Leckfreiheit bzw. eines Lecks kann über eine Busleitung 43 erfolgen, ebenso kann die Überwachungsvorrichtung eine Signalisierungseinrichtung 44, beispielsweise in Form einer Lampe oder einer Anzeige, umfassen. Die Überwachungsvorrichtung 40 kann zentral in der Zugeinheit vorgehalten werden. Alternativ oder zusätzlich kann jeder Bremskreis eine eigene Überwachungsvorrichtung umfassen, die mit einer zentralen Überwachungsvorrichtung des Zugbremssystems zusammen geschlossen ist.

Im Folgenden sollen exemplarisch unterschiedliche Vergleichsabfragen dargestellt werden, die zur Auswertung des R-Drucks gemäß der Ausführungsform nach Fig. 2 verwendet werden können.

### Beispiel 1: Vergleich mit einem im selben Bremskreis vorangehend ermittelten R-Druckwert als Referenzwert

Eine Abfrage könnte lauten:
Falls
- ein Bremszustand vorliegt, und
- eine vorgegebene Zeitspanne verstrichen ist (um einen statischen bzw. quasistatischen Bremszustand herbeizuführen) und
- der Bremskreis nicht über ein Ventil von der Hauptluftbehälterleitung abgetrennt ist und
- die Gleitschutzventile nicht aktiv sind und
- |*pR*_*n*(*t ₐₖₜᵤₑₗₗ*) - *pR*_*n*(*tᵢ*)| > Schwellenwert (wobei tₐₖₜᵤₑₗₗ > tᵢ)
dann liegt ein Leck im Bremszylinderkreis des Drehgestells n vor.

Vorzugsweise wird die Abfrage dadurch erweitert, dass zusätzlich geprüft wird, ob ein Nachspeisen von Bremsfluid in die Hauptluftbehälterleitung unterbunden ist, beispielsweise indem überprüft wird, ob ein Kompressor abgeschaltet ist. Somit wird dann folgende Bedingung eingefügt:
- der Kompressor ausgeschaltet ist und

Die Bedingung "dass der Bremskreis nicht über ein Ventil von der Hauptluftbehälterleitung abgetrennt ist" ist auf genommen, da einzelne Bremskreise auf diese Weise, beispielsweise bei einem bekannten Defekt über die Absperrventile 46 (vergleiche Fig. 1), deaktiviert sein können und solche Bremskreise nicht auf ein Leck im Bremszylinderkreis untersucht werden sollen. Eine Prüfung auf ein Verstreichen einer Zeitspanne kann unterbleiben, wenn nicht in einem statischen oder quasistatischen Bremszustand gemessen werden soll.

### Beispiel 2: Überprüfung des aktuellen R-Drucks gegenüber einem R-Druck eines gleichartigen Bremskreises

Eine Abfrage könnte in einem solchen Fall lauten:
Falls
- ein Bremszustand vorliegt, und
- eine vorgegebene Zeitspanne verstrichen ist (um einen statischen bzw. quasistatischen Bremszustand herbeizuführen) und
- die Gleitschutzventile nicht aktiv sind und
- der Bremskreis nicht von der Hauptluftleitung abgesperrt ist und
- der Kompressor ausgeschaltet ist und
- |*pR*_*k*(*t ₐₖₜᵤₑₗₗ*) - *pR*_*n*(*t ₐₖₜᵤₑₗₗ*)| > Schwellenwert2,
dann liegt ein Leck im Bremszylinderkreis des Drehgestells n vor.

Die Anmerkungen hinsichtlich des Absperrens des Bremskreises, einer Nachspeisung von Bremsfluid und des Prüfens auf eine verstrichene Zeitspanne gelten in diesem Beispiel analog zu Beispiel 1.

### Beispiel 3: Vergleich des aktuellen R-Drucks mit einem Druck der Hauptluftbehälterleitung

Eine Abfrage könnte in einem solchen Fall lauten:
Falls
- ein Bremszustand vorliegt, und
- eine vorgegebene Zeitspanne verstrichen ist (um einen statischen bzw. quasistatischen Bremszustand herbeizuführen) und
- die Gleitschutzventile nicht aktiv sind und
- der Bremskreis nicht von der Hauptluftleitung abgesperrt ist und
- der Kompressor ausgeschaltet ist und
- |*pR*_*n*(*tₐₖₜᵤₑₗₗ*)- *pMRP*(*tₐₖₜᵤₑₗₗ*)| > Schwellenwert3,
dann liegt ein Leck im Bremszylinderkreis des Drehgestells n vor.

Für diese Ausführungsform ist es sinnvoll, eine Drossel 45 zwischen der Hauptluftbehälterleitung 2 dem Drucksensor 38 zum Messen des R-Drucks vorzusehen (vergleiche Fig. 1). In Fig. 1 sind unterschiedliche Positionen für die Drossel 45 dargestellt. In der Regel werden nicht drei Drosseln 45, wie in Fig. 1 dargestellt, verbaut sein, sondern lediglich eine der dargestellten Drosseln 45 in dem Bremskreis 1 angeordnet sein.

### Beispiel 4: Auswertung unterschiedlicher Druckverläufe

Ebenso ist es möglich, dass in die eigentliche Druckauswertungsbedingung komplexere Ausdrücke aufgenommen werden, die beispielsweise einen zeitlichen Druckverlauf in unterschiedlichen Bremskreisen vergleichen. Dies kann beispielsweise dadurch erfolgen, dass die Differenzen für zeitgleich aufgenommene R-Druckwerte des überwachten Bremskreises und R-Druckwerte eines Referenzkreises, d.h. eines gleichartigen Bremskreises, miteinander verglichen werden. Eine solche Bedingung könnte beispielsweise lauten: |*pR*_*n*(*tᵢ*)- *pR*_*k*(*tᵢ*)|*>*|*pR*_*n*(*tₐₖₜᵤₑₗₗ*)- *pR*_*k*(*tₐₖₜᵤₑₗₗ*)

Es sind weitere Auswertungen möglich, die komplexere Vergleiche ausführen. Eine besonders hohe Aussagekraft erhält man jeweils, wenn der Kompressor ausgeschaltet ist, bzw. auf andere Art und Weise ein Nachführen von Bremsfluid in die Bremskreise verhindert wird. Zusätzlich oder alternativ ist es vorteilhaft, wenn die Überwachung in einem statischen bzw. quasistatischen Bremszustand erfolgt.

Die beschriebenen Ausführungsformen gehen davon aus, dass der R-Druck als die das versorgende Bremsfluid betreffende Größe ermittelt und ausgewertet wird. Andere Ausführungsformen können alternativ oder zusätzlich eine Flussmenge oder auch eine Strömungsgeschwindigkeit des Bremsfluids bei der Versorgung des Relaisventils erfassen und auswerten.

Es versteht sich für den Fachmann, dass lediglich beispielhafte Ausführungsformen beschrieben sind.

### Bezugszeichenliste

- 1: Bremskreis
- 2: Hauptluftbehälterleitung
- 3: Hauptluftbehälterleitungsanschluss
- 4: Luftbehälter
- 5: Rückschlagventil
- 6: Relaisventil
- 7: Bremszylinderkreis
- 8: Vorsteuerventil
- c_{V}: Vorsteuerdruck
- 9: Vorsteuerleitung
- 10: Lastleitung
- c: Bremszylinderkreisdruck
- 11: Versorgungsleitung
- 12: Drehgestell
- 13, 14: Achsen
- 15 - 18: Räder
- 19 - 22: Bremszylinder
- 23: ein Bremszylinderkreisstrang
- 24: ein anderer Bremszylinderkreisstrang
- 25, 26: Gleitschutzventile
- 27: Bremszylinderkreis-Drucksensor
- 28: Wagenkörper
- 29: Bremszylinderkreisleitungen
- 31 - 36: Druckschläuche
- 38: Drucksensor
- 40: Überwachungsvorrichtung
- 41: Auswerteeinrichtung
- 42: Sensorleitung
- 43: Busleitung
- 44: Signalisierungseinrichtung
- 45: Drossel (alternative oder kumulative Anordnungspositionen)
- 46: Absperrventile
- 51: Auslösen eines Bremszustandes
- 52: Abwarten einer Zeitspanne
- 53: Messen des aktuellen R-Drucks
- 54: Erfassen/Empfangen von Referenzwerten
- 55: Messen eines R-Drucks des Bremskreises als Referenzwert
- 56: Messen eines R-Drucks eines anderen Bremskreises als Referenzwert
- 57: Messen des Hauptluftbehälterleitungsdrucks
- 58: Messen eines R-Drucks eines anderen Bremskreises beim vorangehenden Zeitpunkt als Referenzwert
- 59: Messen des Hauptbehälterluftleitungsdrucks zu einem vorangehenden Zeitpunkt
- 60: Auswerten/Vergleichen des aktuellen R-Drucks mit mindestens einem Referenzwert
- 61: Vergleichen mit einer Vorgabe
- 62: Anzeigen eines Lecks im Bremskreis
- 63: Anzeigen einer Leckfreiheit
- 64: Beenden des Bremszustandes
- 65: Abschalten eines Kompressors/Unterbinden einer Nachführung von Bremsfluid

## Patentansprüche

1. Verfahren zum Erkennen einer Leckage in einem Bremszylinderkreis (7) eines von mehreren Bremskreisen (1) eines Zugbremssystems, bei dem die Bremskreise (1) mit einem Bremsfluid über eine Hauptluftbehälterleitung (2) versorgt werden und wobei jeder Bremskreis (1) einen als lokales Reservoir für das Bremsfluid dienenden Luftbehälter (4) sowie ein Relaisventil (6) zum Steuern des Drucks (c) in dem Bremszylinderkreis (7) umfasst,
**dadurch gekennzeichnet, dass**
eine das Bremsfluid, welches das Relaisventil (6) versorgt, betreffende Größe gemessen wird und als eine das Bremsfluid kennzeichnende Größe verwendet wird oder anhand der Messergebnisse für die mindestens eine das versorgende Bremsfluid betreffende Größe die das Bremsfluid kennzeichnende Größe abgeleitet und die das Bremsfluid kennzeichnende Größe und mit mindestens einem Referenzwert verglichen wird und abhängig von dem Vergleichsergebnis ein Vorhandensein eines Lecks in dem Bremszylinderkreis (7) des Bremskreises (1) oder eine Leckfreiheit angezeigt wird, wobei eine Abweichung außerhalb eines Toleranzbereichs ein Leck und eine Übereinstimmung oder eine Abweichung innerhalb des Toleranzbereichs eine Leckfreiheit anzeigt. D.h. beispielsweise, dass eine Abweichung um mehr als eine Toleranzgrenze ein Leck anzeigt und eine Übereinstimmung oder Abweichung um weniger als die Toleranzgrenze eine Leckfreiheit anzeigt.

2. Verfahren nach Anspruch 1 **dadurch gekennzeichnet, dass** der Bremskreis (1) einen Drucksensor (38) zum Messen des an dem Relaisventil (6) anliegenden, als R-Druck (pR_n) bezeichneten Versorgungsdrucks des Bremsfluids umfasst, wobei der Verfahrensschritt Messen der das Bremsfluid, welches das Relaisventil (6) versorgt, betreffenden Größe
ein Messen des R-Drucks (pR_n) umfasst.

3. Verfahren nach einem der Ansprüche 1 oder 2, dass die das Bremsfluid betreffende Größe in einem statischen oder quasistatischen Bremszustand gemessen wird.

4. Verfahren nach Anspruch 2 oder 3, **dadurch gekennzeichnet, dass** als der mindestens eine Referenzwert der R-Druck desselben Bremskreises verwendet wird, der zeitlich vorangehend ebenfalls in demselben, vorzugsweise statischen oder quasistatischen, Bremszustand gemessen wird, und ein Auftreten einer Druckdifferenz, deren Betrag größer als ein Vorgabewert ist, das Vorhandensein eines Lecks in dem Bremszylinderkreis (7) anzeigt.

5. Verfahren nach einem der Ansprüche 1 bis 4, **dadurch gekennzeichnet, dass** als der mindestens eine Referenzwert der R-Druck (pR_k) eines anderen gleichartigen Bremskreises (1) gemessen wird und ein Auftreten einer Druckdifferenz, deren Betrag größer als ein Vorgabewert ist, das Vorhandensein eines Lecks in dem Bremszylinderkreis (7) anzeigt oder als der mindestens eine Referenzwert ein Druck in der Hauptluftbehälterleitung (2) gemessen wird und ein Auftreten einer Druckdifferenz, deren Betrag größer als ein Vorgabewert ist, das Vorhandensein eines Lecks in dem Bremszylinderkreis (7) anzeigt.

6. Verfahren nach einem der Ansprüche 2 oder 3, **dadurch gekennzeichnet, dass** zusätzlich zu dem aktuellen R-Druck (pR_n(tₐₖₜᵤₑₗₗ)) während desselben, vorzugsweise statischen oder quasistatischen, Bremszustands weitere R-Drücke (pR_n(tᵢ)) des mindestens einen Bremskreises erfasst werden, und mindestens ein Druckgradientenwert als die das versorgende Bremsfluid kennzeichnende Größe errechnet wird und als der mindestens eine Referenzwert ein Druckgradientenwert für den Vergleich verwendet wird.

7. Verfahren nach einem der Ansprüche 1 bis 6, **dadurch gekennzeichnet, dass** zusätzlich zu dem aktuellen R-Druck (pR_n(tₐₖₜᵤₑₗₗ)) während desselben, vorzugsweise statischen oder quasistatischen, Bremszustands weitere R-Drücke (pR_n(tᵢ)) des mindestens einen Bremskreises erfasst werden und hierzu zeitgleich gemessen oder zeitlich gekoppelt gemessene Druckwerte (pR_k(tᵢ),..., pMRP(tᵢ)) als Referenzwerte erfasst oder empfangen werden und das Vergleichen des aktuellen R-Drucks mit dem mindestens einen Referenzwert ein Auswerten eines zeitlichen R-Druckverhaltens des Bremskreises während des, vorzugsweise quasistatischen oder statischen, Bremszustands mit mindestens einem zeitlichen Druckverhalten der zeitgleich gemessenen oder zeitlich gekoppelt gemessenen Referenzwerte umfasst.

8. Verfahren nach Anspruch 1, **dadurch gekennzeichnet, dass** als die eine das Bremsfluid, welches das Relaisventil versorgt, betreffende Größen, insbesondere eine Strömungsgeschwindigkeit oder eine Flussmenge des Bremsfluids gemessen wird.

9. Verfahren nach einem der Ansprüche 1 bis 8, **dadurch gekennzeichnet, dass** ein Nachführen von Bremsfluid in den Hauptluftbehälter, der die Hauptluftbehälterleitung (2) speist, und/oder in die Hauptluftbehälterleitung (2) unterbunden wird.

10. Überwachungsvorrichtung (40) für mindestens einen Bremskreis (1) eines Zugbremssystems zum Ermitteln eines Lecks in einem Bremszylinderkreis (7) des mindestens einen Bremskreises (1) nach einem Verfahren gemäß einem der vorangehenden Patentansprüche, wobei der mindestens eine Bremskreis (1) umfasst:
- einen Hauptluftbehälterleitungsanschluss (3) für einen Anschluss an eine Hauptluftbehälterleitung (2), über die dem Bremskreis (1) ein Bremsfluid bereitgestellt wird,
- einen mit dem Hauptluftbehälterleitungsanschluss (3) verbundenen, als Reservoir dienenden Luftbehälter (4),
- ein mit dem Luftbehälter (4) über eine Versorgungsleitung (11) in Verbindung stehendes Relaisventil (6) zum Steuern des Drucks in dem Bremszylinderkreis (7),
**dadurch gekennzeichnet, dass**
mindestens eine Messeinrichtung in einer Versorgungsleitung (11) zum Messen mindestens einer das Bremsfluid, welches das Relaisventil versorgt, betreffenden Größe angeordnet ist,
wobei die Überwachungsvorrichtung (40) eine Auswerteeinrichtung (41) umfasst, die mit der mindestens einen Messeinrichtung des Bremskreises gekoppelt ist und ausgebildet ist, in einem Bremszustand die aktuelle das versorgende Bremsfluid betreffende Größe des Bremskreises (1) zu erfassen, und die aktuelle das versorgende Bremsfluid betreffende Größe als eine das versorgende Bremsfluid kennzeichnende Größe zu verwenden oder die das versorgende Bremsfluid kennzeichnende Größe aus Messergebnissen der das mindestens eine versorgende Bremsfluid betreffenden Größe abzuleiten und die das versorgende Bremsfluid kennzeichnende Größe in dem einen Bremszustand mit mindestens einem Referenzwert oder mehreren Referenzwerten zu vergleichen und abhängig von dem Vergleichsergebnis ein Vorhandensein eines Lecks in dem Bremszylinderkreis (7) oder eine Leckfreiheit zu signalisieren, wobei eine Abweichung außerhalb eines Toleranzbereichs ein Leck und eine Übereinstimmung oder eine Abweichung innerhalb des Toleranzbereichs eine Leckfreiheit anzeigt.

11. Überwachungsvorrichtung (40) nach Anspruch 10, **dadurch gekennzeichnet, dass** der Bremszustand ein statischer oder quasistatischer Bremszustand ist.

12. Überwachungsvorrichtung (40) nach Anspruch 10 oder 11, **dadurch gekennzeichnet, dass** die mindestens eine Messeinrichtung einen Drucksensor (38) zum Messen eines an dem Relaisventil (6) anliegenden, als R-Druck (pR_n) bezeichneten Versorgungsdrucks des Bremsfluids umfasst und die Auswerteeinrichtung (41), die mit dem Drucksensor (38) des Bremskreises gekoppelt ist, ausgebildet ist, in dem, vorzugsweise statischen oder quasistatischen, Bremszustand den aktuellen R-Druck (pR_n(tₐₖₜᵤₑₗₗ)) des Bremskreises (1) als die das versorgende Bremsfluid betreffende Größe zu erfassen.

13. Überwachungsvorrichtung nach einem der Ansprüche 10 bis 12, **dadurch gekennzeichnet, dass** in dem Bremskreis (1) zwischen dem Hauptluftbehälteranschluss (3) und der mindestens einen Messeinrichtung (38) eine Drossel (45) angeordnet ist.

14. Überwachungsvorrichtung nach Anspruch 10 bis 13, **dadurch gekennzeichnet, dass** die Messeinrichtung eine Flussmesseinrichtung oder eine Strömungsgeschwindigkeitsmesseinrichtung umfasst.

15. Zugbremssystem mit einer Fähigkeit, ein Leck in einem Bremszylinderkreis mindestens eines Bremskreises einer Mehrzahl von Bremskreisen (1) gemäß einem Verfahren nach einem der Ansprüche 1 bis 9 zu erfassen, wobei das Zugbremssystem umfasst:
eine Hauptluftbehälterleitung (2) zum Versorgen der Bremskreise (1) mit Bremsfluid und die Mehrzahl von Bremskreisen (1), wobei jeder der Bremskreise (1) umfasst:
• einen als lokales Reservoir für das Bremsfluid dienenden Luftbehälter (4),
• ein Relaisventil (6) zum Steuern des Drucks in dem Bremszylinderkreis (7)
• sowie mindestens eine Messeinrichtung zum Messen mindestens einer das Bremsfluid, welches das Relaisventil (6) versorgt, betreffenden Größe,
und mindestens eine Auswerteeinrichtung (41), die ausgebildet ist, in einem Bremszustand eine aktuelle das versorgende Bremsfluid betreffende Größe zu erfassen und als eine das versorgende Bremsfluid kennzeichnende Größe zu verwenden oder die das versorgende Bremsfluid kennzeichnende Größe aus Messergebnissen der das mindestens eine versorgende Bremsfluid betreffenden Größe abzuleiten und die das versorgende Bremsfluid kennzeichnende Größe mit mindestens einem Referenzwert zu vergleichen und basierend auf einem Vergleichsergebnis ein Vorhandensein eines Lecks in dem Bremszylinderkreis (7) des Bremssystems oder eine Leckfreiheit zu signalisieren, wobei eine Abweichung außerhalb eines Toleranzbereichs ein Leck und eine Übereinstimmung oder eine Abweichung innerhalb des Toleranzbereichs eine Leckfreiheit anzeigt.

## Claims

1. A method for detecting a leak in a brake cylinder circuit (7) of one of a plurality of brake circuits (1) of a train brake system in which the brake circuits (1) are supplied with brake fluid via a main air reservoir pipe (2), each brake circuit (1) comprising an air reservoir (4) serving as a local reservoir for the brake fluid and a relay valve (6) for controlling the pressure (c) in the brake cylinder circuit (7),
**characterized in that**
a variable related to the brake fluid supplying the relay valve (6) is measured and used as a variable characterizing the brake fluid or, based on the measurement results, the variable characterizing the brake fluid is derived for the at least one variable related to the supplying brake fluid, and the variable characterizing the brake fluid is compared to at least one reference value and, depending on the result of the comparison, a presence of a leak in the brake cylinder circuit (7) of the brake circuit (1) or an absence of leakage is indicated, a deviation outside a tolerance range indicating a leak, and an agreement or a deviation within the tolerance range indicating an absence of leakage, which is to say, for example, that a deviation by more than a tolerance limit indicates a leak, and an agreement or a deviation by less than the tolerance limit indicates an absence of leakage.

2. The method according to claim 1, **characterized in that** the brake circuit (1) comprises a pressure sensor (38) for measuring the supply pressure of the brake fluid present at the relay valve (6) and referred to as R pressure (pR_n), the method step of measuring the variable related to the brake fluid supplying the relay valve (6) including measuring the R pressure (pR_n).

3. The method according to either claim 1 or 2, **characterized in that** the variable related to the brake fluid is measured in a static or quasi-static braking state.

4. The method according to claim 2 or 3, **characterized in that** the R pressure of the same brake circuit that, chronologically before then, is likewise measured in the same, preferably static or quasi-static, braking state is used as the at least one reference value, and an occurrence of a pressure differential having a magnitude greater than a predefined value indicates the presence of a leak in the brake cylinder circuit (7).

5. The method according to any one of claims 1 to 4, **characterized in that** the R pressure (pR_k) of another equivalent brake circuit (1) is measured as the at least one reference value, and an occurrence of a pressure differential having a magnitude greater than a predefined value indicates the presence of a leak in the brake cylinder circuit (7), or a pressure in the main air reservoir pipe (2) is measured as the at least one reference value, and an occurrence of a pressure differential having a magnitude greater than a predefined value indicates the presence of a leak in the brake cylinder circuit (7).

6. The method according to either claim 2 or 3, **characterized in that**, in addition to the current R pressure (pR_n(t_{current})) during the same, preferably static or quasi-static, braking state, further R pressures (pR_n(tᵢ)) of the at least one brake circuit are detected, and at least one pressure gradient value is calculated as the variable characterizing the supplying brake fluid, and a pressure gradient value is used as the at least one reference value for the comparison.

7. The method according to any one of claims 1 to 6, **characterized in that**, in addition to the current R pressure (pR_n(t_{current})) during the same, preferably static or quasi-static, braking state, further R pressures (pR_n(tᵢ)) of the at least one brake circuit are detected and, for this purpose, pressure values (pR_k(tᵢ),..., pMRP(tᵢ)) measured at the same time, or measured in a temporally coupled manner, are detected or received as reference values, and the comparison of the current R pressure to the at least one reference value includes an evaluation of a temporal R pressure behavior of the brake circuit during the, preferably static or quasi-static, braking state with at least one temporal pressure behavior of the reference values measured at the same time or measured in a temporally coupled manner.

8. The method according to claim 1, **characterized in that**, in particular, a flow rate or a flow volume of the brake fluid is measured as the one variable related to the brake fluid supplying the relay valve.

9. The method according to any one of claims 1 to 8, **characterized in that** a replenishment of brake fluid into the main air reservoir feeding the main air reservoir pipe (2) and/or into the main air reservoir pipe (2) is suppressed.

10. A monitoring device (40) for at least one brake circuit (1) of a train brake system for ascertaining a leak in a brake cylinder circuit (7) of the at least one brake circuit (1) according to a method according to any one of the preceding claims, the at least one brake circuit (1) comprising:
- a main air reservoir pipe connection (3) for connecting to a main air reservoir pipe (2) via which a brake fluid is provided to the brake circuit (1);
- an air reservoir (4) connected to the main air reservoir pipe connection (3) and serving as a reservoir;
- a relay valve (6) connected to the air reservoir (4) via a supply pipe (11) for controlling the pressure in the brake cylinder circuit (7),
**characterized in that**
at least one measuring device is disposed in a supply pipe (11) for measuring at least one variable related to the brake fluid supplying the relay valve,
the monitoring device (40) comprising an evaluation unit (41), which is coupled to the at least one measuring device of the brake circuit and designed, in a braking state, to detect the present variable of the brake circuit (1) related to the supplying brake fluid, and to use the present variable related to the supplying brake fluid as a variable characterizing the supplying brake fluid, or to derive the variable characterizing the supplying brake fluid from measurement results of the variable related to the at least one supplying brake fluid, and to compare the variable characterizing the supplying brake fluid in the one braking state to at least one reference value or a plurality of reference values and, as a function of the result of the comparison, to indicate a presence of a leak in the brake cylinder circuit (7) or an absence of leakage, a deviation outside a tolerance range indicating a leak, and an agreement or a deviation within the tolerance range indicating an absence of leakage.

11. The monitoring device (40) according to claim 10, **characterized in that** the braking state is a static or quasi-static braking state.

12. The monitoring device (40) according to claim 10 or 11, **characterized in that** the at least one measuring device comprises a pressure sensor (38) for measuring a supply pressure of the brake fluid present at the relay valve (6) and referred to as R pressure (pR_n), and the evaluation unit (41), which is coupled to the pressure sensor (38) of the brake circuit, is designed to detect the current R pressure (pR_n(t_{current})) of the brake circuit (1) as the variable related to the supply brake fluid in the, preferably static or quasi-static, braking state.

13. The monitoring device according to any one of claims 10 to 12, **characterized in that** a choke (45) is disposed in the brake circuit (1) between the main air reservoir connection (3) and the at least one measuring device (38).

14. The monitoring device according to claims 10 to 13, **characterized in that** the measuring device comprises a flow measuring device or a flow rate measuring device.

15. A train brake system, capable of detecting a leak in a brake cylinder circuit of at least one brake circuit of a plurality of brake circuits (1) according to a method according to any one of claims 1 to 9, the train brake system comprising:
a main air reservoir pipe (2) for supplying the brake circuits (1) with brake fluid and the plurality of brake circuits (1), each of the brake circuits (1) comprising:
• an air reservoir (4) serving as a local reservoir for the brake fluid;
• a relay valve (6) for controlling the pressure in the brake cylinder circuit (7); and
• at least one measuring device for measuring at least one variable related to the brake fluid supplying the relay valve (6);
and at least one evaluation unit (41), which is designed, in a braking state, to detect a present variable related to the supplying brake fluid and to use this as a variable characterizing the supplying brake fluid, or to derive the variable characterizing the supplying brake fluid from measurement results of the variable related to the at least one supplying brake fluid, and to compare the variable characterizing the supplying brake fluid to at least one reference value and, based on a result of the comparison, to indicate a presence of a leak in the brake cylinder circuit (7) of the brake system or an absence of leakage, a deviation outside a tolerance range indicating a leak, and an agreement or a deviation within the tolerance range indicating an absence of leakage.

## Revendications

1. Procédé servant à identifier une fuite dans un circuit de cylindres de freinage (7) d'un parmi plusieurs circuits de freinage (1) d'un système de freinage de train, dans lequel les circuits de freinage (1) sont alimentés en un fluide de freinage par l'intermédiaire d'un conduit de contenant à air principal (2) et dans lequel chaque circuit de freinage (1) comprend un contenant à air (4) faisant office de réservoir local pour le fluide de freinage ainsi qu'une soupape relais (6) servant à commander la pression (c) dans le circuit de cylindres de freinage (7),
**caractérisé en ce que**
une grandeur concernant le fluide de freinage, lequel alimente la soupape relais (6), est mesurée et est utilisée en tant qu'une grandeur caractérisant le fluide de freinage ou la grandeur caractérisant le fluide de freinage est déduite à l'aide des résultats de mesure pour l'au moins une grandeur caractérisant le fluide de freinage d'alimentation et la grandeur caractérisant le fluide de freinage est comparée à au moins une valeur de référence et une présence d'une fuite dans le circuit de cylindres de freinage (7) du circuit de freinage (1) ou une absence de fuite sont indiquées en fonction du résultat de comparaison, dans lequel un écart en dehors d'une plage de tolérance indique une fuite et une concordance ou un écart à l'intérieur de la plage de tolérance indique une absence de fuite, en d'autres termes, à titre d'exemple, un écart supérieur à une limite de tolérance indique une fuite et une concordance ou un écart inférieur à la limite de tolérance indique une absence de fuite.

2. Procédé selon la revendication 1, **caractérisé en ce que** le circuit de freinage (1) comprend un capteur de pression (38) servant à mesurer la pression d'alimentation du fluide de freinage appliquée sur la soupape relais (6), désignée en tant que pression R (pR_n), dans lequel l'étape de procédé de la mesure de la grandeur concernant le fluide de freinage, lequel alimente la soupape relais (6), comprend une mesure de la pression R (pR_n).

3. Procédé selon l'une quelconque des revendications 1 ou 2, **caractérisé en ce que** la grandeur concernant le fluide de freinage est mesurée dans un état de freinage statique ou quasi statique.

4. Procédé selon la revendication 2 ou 3, **caractérisé en ce que** la pression R de ce même circuit de freinage est utilisée en tant que l'au moins une valeur de référence, qui est mesurée antérieurement également dans le même état de freinage, de préférence statique ou quasi statique, et une apparition d'une différence de pression, dont la valeur est supérieure à une valeur spécifiée, indique la présence d'une fuite dans le circuit de cylindres de freinage (7).

5. Procédé selon l'une quelconque des revendications 1 à 4, **caractérisé en ce que** la pression R (pR_k) d'un autre circuit de freinage (1) similaire est mesurée en tant que l'au moins une valeur de référence et une apparition d'une différence de pression, dont la valeur est supérieure à une valeur spécifiée, indique la présence d'une fuite dans le circuit de cylindres de freinage (7) ou une pression dans le conduit de contenant à air principal (2) est mesurée en tant que l'au moins une valeur de référence et une apparition d'une différence de pression, dont la valeur est supérieure à une valeur spécifiée, indique la présence d'une fuite dans le circuit de cylindre de freinage (7).

6. Procédé selon l'une quelconque des revendications 2 ou 3, **caractérisé en ce qu'**en supplément de la pression R instantanée (pR_n (t_{instantanée}), d'autres pressions R (pR_n(tᵢ)) de l'au moins un circuit de freinage sont détectées pendant le même état de freinage, de préférence statique ou quasi statique, et au moins une valeur de gradient de pression est calculée en tant que la grandeur caractérisant le fluide de freinage d'alimentation et une valeur de gradient de pression pour la comparaison est utilisée en tant que l'au moins une valeur de référence.

7. Procédé selon l'une quelconque des revendications 1 à 6, **caractérisé en ce qu'**en supplément de la pression R instantanée (pR_n(t_{instantanée})), d'autres pressions R (pR_n(tᵢ)) de l'au moins un circuit de freinage sont détectées pendant le même état de freinage, de préférence statique ou quasi statique, et des valeurs de pression (pR_k(tᵢ)), ..., pMRP(tᵢ)) mesurées à cet effet de manière simultanée ou mesurées avec un couplage temporel sont détectées ou reçues en tant que valeurs de référence et la comparaison de la pression R instantanée à l'au moins une valeur de référence comprend une évaluation d'un comportement de pression R temporel du circuit de freinage pendant l'état de freinage, de préférence quasi statique ou statique, avec au moins un comportement de pression temporel des valeurs de référence mesurées de manière simultanée ou mesurées par couplage temporel.

8. Procédé selon la revendication 1, **caractérisé en ce qu'**en particulier une vitesse d'écoulement ou un débit du fluide de freinage sont mesurés en tant que les grandeurs concernant le fluide de freinage, qui alimente la soupape relais.

9. Procédé selon l'une quelconque des revendications 1 à 8, **caractérisé en ce qu'**un acheminement ultérieur de fluide de freinage dans le contenant à air principal, qui alimente le conduit de contenant à air principal (2), et/ou dans le conduit de contenant à air principal (2) est empêché.

10. Dispositif de surveillance (40) pour au moins un circuit de freinage (1) d'un système de freinage de train servant à déterminer une fuite dans un circuit de cylindres de freinage (7) de l'au moins un circuit de freinage (1) selon un procédé selon l'une quelconque des revendications précédentes, dans lequel l'au moins un circuit de freinage (1) comprend :
- un raccord de conduit de contenant à air principal (3) pour un raccordement à un conduit de contenant à air principal (2), par l'intermédiaire duquel un fluide de freinage est fourni au circuit de freinage (1),
- un contenant à air (4) relié au raccord de conduit de contenant à air principal (3), faisant office de réservoir,
- une soupape relais (6) reliée au contenant à air (4) par l'intermédiaire d'un conduit d'alimentation (11), servant à commander la pression dans le circuit de cylindres de freinage (7),
**caractérisé en ce que**
au moins un système de mesure est disposé dans un conduit d'alimentation (11) pour mesurer au moins une grandeur concernant le fluide de freinage, lequel alimente la soupape relais,
dans lequel le dispositif de surveillance (40) comprend un système évaluation (41), qui est couplé à l'au moins un système de mesure du circuit de freinage (1) et est réalisé pour détecter dans un état de freinage la grandeur instantanée concernant le fluide de freinage d'alimentation et pour utiliser la grandeur instantanée concernant le fluide de freinage d'alimentation en tant qu'une grandeur caractérisant le fluide de freinage d'alimentation ou pour déduire la grandeur caractérisant le fluide de freinage d'alimentation à partir de résultats de mesure de la grandeur concernant l'au moins un fluide de freinage d'alimentation et pour comparer la grandeur caractérisant le fluide de freinage d'alimentation dans un état de freinage à au moins une valeur de référence ou à plusieurs valeurs de référence et pour signaler, en fonction du résultat de comparaison, une présence d'une fuite dans le circuit de cylindres de freinage (7) ou une absence de fuite, dans lequel un écart en dehors d'une plage de tolérance indique une fuite et une concordance ou un écart à l'intérieur de la plage de tolérance indique une absence de fuite.

11. Dispositif de surveillance (40) selon la revendication 10, **caractérisé en ce que** l'état de freinage est un état de freinage statique ou quasi statique.

12. Dispositif de surveillance (40) selon la revendication 10 ou 11, **caractérisé en ce que** l'au moins un système de mesure comprend un capteur de pression (38) servant à mesurer une pression d'alimentation appliquée sur la soupape relais (6), désignée en tant que pression R (pR_n), et le système d'évaluation (41), qui est couplé au capteur de pression (38) du circuit de freinage, est réalisé pour détecter, dans l'état de freinage, de préférence statique ou quasi statique, la pression R instantanée (pR_n (t_{instantanée})) du circuit de freinage (1) en tant que la grandeur concernant le fluide de freinage d'alimentation.

13. Dispositif de surveillance selon l'une quelconque des revendications 10 à 12, **caractérisé en ce qu'**un étranglement (45) est disposé dans le circuit de freinage (1) entre le raccord de contenant à air principal (3) et l'au moins un système de mesure (38).

14. Dispositif de surveillance selon la revendication 10 à 13, **caractérisé en ce que** le système de mesure comprend un débitmètre ou un système de mesure de vitesse d'écoulement.

15. Système de freinage de train avec une capacité à détecter une fuite dans un circuit de cylindres de freinage d'au moins un circuit de freinage d'une multitude de circuits de freinage (1) selon un procédé selon l'une quelconque des revendications 1 à 9, dans lequel le système de freinage de train comprend :
un conduit de contenant à air principal (2) servant à alimenter les circuits de freinage (1) en fluide de freinage et la multitude de circuits de freinage (1), dans lequel chacun des circuits de freinage (1) comprend :
- un contenant à air (4) faisant office de réservoir local pour le fluide de freinage,
- une soupape relais (6) servant à commander la pression dans le circuit de cylindres de freinage (7),
- ainsi qu'au moins un système de mesure servant à mesurer au moins une grandeur concernant le fluide de freinage, lequel alimente la soupape relais (6),
et au moins un système d'évaluation (41), qui est réalisé pour détecter, dans un état de freinage, une grandeur instantanée concernant le fluide de freinage d'alimentation et pour l'utiliser en tant qu'une grandeur caractérisant le fluide de freinage d'alimentation ou pour déduire la grandeur caractérisant le fluide de freinage d'alimentation à partir de résultats de mesure de la grandeur concernant l'au moins un fluide de freinage d'alimentation et pour comparer la grandeur caractérisant le fluide de freinage d'alimentation à au moins une valeur de référence et pour signaler, sur la base d'un résultat de comparaison, une présence d'une fuite dans le circuit de cylindres de freinage (7) du système de freinage ou une absence de fuite, dans lequel un écart en dehors d'une plage de tolérance indique une fuite et une concordance ou un écart à l'intérieur de la plage de tolérance indique une absence de fuite.
